# FASCICULE DE BREVET EUROPEEN

(11) **EP 3 962 149 B1**
(45) Date de publication et mention de la délivrance du brevet: **09.10.2024**
(21) Numéro de dépôt: 21193035.9
(22) Date de dépôt: 25.08.2021
(51) Int. Cl.: H04W 24/02

(54) **PASSERELLE D'ÉCHANGES D'INFORMATIONS ENTRE DES UNITÉS DE TRAITEMENT, DISPOSITIFS ET PROCÉDÉ ASSOCIÉS**
SCHNITTSTELLE ZUM DATENAUSTAUSCH ZWISCHEN VERARBEITUNGSEINHEITEN, ENTSPRECHENDE VORRICHTUNGEN UND ENTSPRECHENDES VERFAHREN
GATEWAY OF INFORMATION EXCHANGES BETWEEN PROCESSING UNITS, ASSOCIATED DEVICES AND METHOD

(30) Priorité: 26.08.2020 FR 2008708
(43) Date de publication de la demande: 02.03.2022
(73) Titulaire: THALES, 92400 Courbevoie (FR)
(72) Inventeur: CAPIRCIO, Patrice, 33701 MERIGNAC (FR); MONNIER, Stéphane, 33701 MERIGNAC (FR); LONDRES, Hervé, 33701 MERIGNAC (FR); MARRON, Christophe, Claude, Roland, 49300 CHOLET (FR); ECH CHERGUI, Youcef, 49300 CHOLET (FR)
(74) Mandataire: Lavoix

(56) Documents cités:
- EP-A2- 0 833 480

## Description

La présente invention concerne une passerelle d'échanges d'informations entre des unités de traitement. La présente invention porte également sur une architecture de traitement d'informations et une plate-forme comportant la passerelle. La présente invention concerne aussi un procédé d'échanges d'informations entre une première unité de traitement d'informations et une deuxième unité de traitement d'informations utilisant la passerelle. La présente invention se rapporte aussi à un produit programme d'ordinateur et un support lisible d'informations associés.

De manière générale, l'invention se situe dans le domaine du traitement d'informations sécurisées présentant des niveaux de criticité distincts par une architecture de traitement. Formulée de manière générale, la problématique associée à ce domaine est de garantir l'intégrité, l'authenticité, le cloisonnement ainsi que la maîtrise des traitements d'opérations appliquées à des informations requérant des niveaux de criticité différents au sein d'un même système.

Pour cela, il est connu d'insérer un label sur chaque information. Un tel label est attaché à chaque information échangée et décrit son niveau de criticité. Le label est à apposer avant que l'information ne soit émise par une unité de traitement à destination d'une autre unité de traitement. Le filtrage des informations est effectué sur la base du label et le niveau de criticité que peut traiter l'unité de traitement de destination. Le brevet EP0833480 illustre un tel fonctionnement.

Toutefois, cela suppose de déléguer au moins partiellement la sécurité à des systèmes subséquents dont la criticité peut être non maîtrisée. Il en résulte un risque pour la sécurité.

Il est à noter que cela impose aussi de changer l'information en rajoutant un label, ce qui peut être problématique pour connecter des équipements dont il n'est pas désiré de faire des modifications.

Il existe donc un besoin pour une passerelle d'échanges d'informations entre des unités de traitement qui soit plus fiable au niveau de la sécurité.

A cet effet, l'invention propose une passerelle d'échanges d'informations entre des unités de traitement, selon la revendication 1, un système de traitement d'informations selon la revendication 9, une plate-forme selon la revendication 10, un procédé d'échanges d'informations selon la revendication 11, un produit programme d'ordinateur selon la revendication 12 et un support lisible d'informations selon la revendication 13. Les revendications dépendantes montrent des modes de réalisation préférés de l'invention.

D'autres caractéristiques et avantages de l'invention apparaîtront à la lecture de la description qui suit de modes de réalisation de l'invention, donnée à titre d'exemple uniquement et en référence aux dessins qui sont :
- [Fig 1] figure 1, une vue schématique d'une plate-forme comportant une passerelle d'échanges d'informations, et

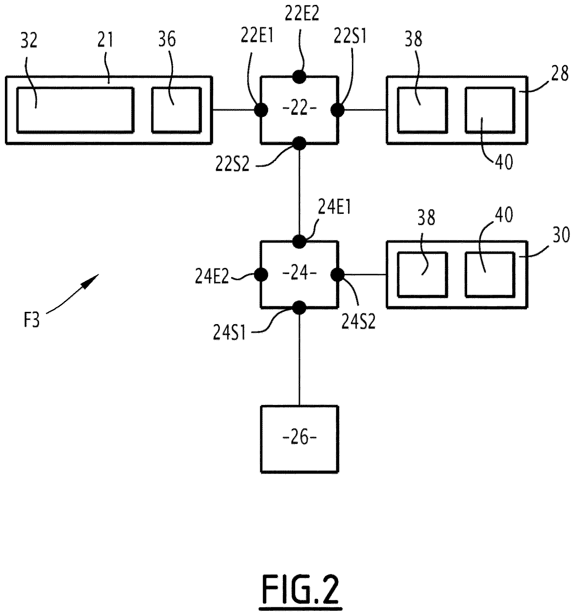

- [Fig 2] figure 2, une vue schématique d'une partie de la passerelle de la figure 1. Une plate-forme 10 est illustrée schématiquement sur la figure 1.

Par exemple, la plate-forme 10 est un aéronef comme un avion, un hélicoptère, un drone.

En variante, la plate-forme 10 est un engin non-volant.

La plate-forme 10 comporte un ensemble d'éléments parmi lesquels une architecture de traitement d'informations 12.

L'architecture 12 est propre à traiter un ensemble d'informations.

Une information est à entendre au sens large comme comprenant tout type de données, et pas uniquement des données de mesure provenant de capteurs.

Chaque information est associée à un niveau de criticité propre. Cela signifie que chaque information appartient à un domaine ayant un certain niveau de criticité.

Les informations peuvent ainsi être rassemblées en ensemble de informations présentant les mêmes niveaux de criticité.

Le vocabulaire de « domaine fonctionnel » est parfois utilisé pour désigner de tel ensemble.

A chaque ensemble, il est possible d'associer un nombre entier i, i variant entre 1 correspondant au niveau de criticité le plus faible et N (N étant un entier supérieur ou égal à 2) et correspondant au niveau de criticité le plus fort.

Dans l'exemple décrit, il est supposé qu'il existe quatre niveaux de criticités : un niveau 1, un niveau 2, un niveau 3 et un niveau 4.

L'architecture 12 comporte ainsi plusieurs types d'unités de traitement 14, à savoir des premières unités de traitement 14_1, des deuxièmes unités de traitement 14_2, des troisièmes unités de traitement 14_3 et des quatrièmes unités de traitement 14_4 ainsi qu'une passerelle d'échange d'informations 16.

Chaque unité de traitement 14 est définie par un niveau de criticité qui lui est propre.

Chaque unité de traitement 14 est propre à traiter uniquement des informations ayant un niveau de criticité inférieur ou égal au niveau de criticité de l'unité de traitement 14 considérée.

Plus précisément, chaque première unité de traitement 14_1 est propre à traiter des informations de niveau 1 uniquement. Aucune information de niveau 2, 3 ou 4 n'est censée transiter dans une première unité de traitement 14_1. Pour la première unité de traitement 14_1, les informations interdites sont les informations de niveau 2, 3 ou 4.

Chaque deuxième unité de traitement 14_2 est propre à traiter des informations de niveau 1 et de niveau 2 uniquement. Aucune information de niveau 3 ou 4 n'est censée transiter dans une deuxième unité de traitement 14 2. Pour la deuxième unité de traitement 14_2, les informations interdites sont les informations de niveau 3 ou 4.

Chaque troisième unité de traitement 14_3 est propre à traiter des informations de niveau 1, des informations de niveau 2 et des informations de niveau 3. Pour la troisième unité de traitement 14_3, les informations interdites sont les informations de niveau 4.

Chaque quatrième unité de traitement 14_4 est propre à traiter des informations de niveau 1, des informations de niveau 2, des informations de niveau 3 et des informations de niveau 4. Pour la quatrième unité de traitement 14_4, aucune information n'est interdite.

La passerelle 16 sert à garantir la non-compromission des informations envoyées par les unités de traitement 14.

En particulier, la passerelle 16 assure qu'aucune information interdite ne circule entre une unité de traitement 14 ayant le droit de traiter l'information interdite et une unité de traitement 14 n'ayant pas le droit de traiter l'information interdite.

Plus spécifiquement, la passerelle 16 assure qu'aucune information de niveau 4 ne circule depuis une quatrième unité de traitement 14_4 vers une première unité de traitement 14_1 ou une deuxième unité de traitement 14_2 ou une troisième unité de traitement 14_3. La passerelle 16 assure qu'aucune information de niveau 3 ne circule depuis une troisième unité de traitement 14_3 ou une quatrième unité de traitement 14_4 vers une première unité de traitement 14_1 ou une deuxième unité de traitement 14_2. La passerelle 16 assure aussi qu'aucune information de niveau 2 ne circule depuis une quatrième unité de traitement 14_4 ou une troisième unité de traitement 14_3 ou une deuxième unité de traitement 14_2 vers une première unité de traitement 14_1.

Toutefois, la passerelle 16 autorise le passage d'informations depuis une unité de traitement 14 ayant un niveau de criticité inférieur vers une unité de traitement 14 ayant un niveau de criticité supérieur.

Dans ce cas précis, cela signifie que la passerelle 16 autorise le passage d'informations depuis une première unité de traitement 14_1 vers une deuxième unité de traitement 14_2 ou une troisième unité de traitement 14_3 ou une quatrième unité de traitement 14_4, depuis une deuxième unité de traitement 14_2 vers une troisième unité de traitement 14_3 ou une quatrième unité de traitement 14_4 ainsi que depuis la troisième unité de traitement 14_3 vers la quatrième unité de traitement 14_4.

Selon l'exemple décrit, la passerelle 16 comporte trois filtres 18, un premier filtre F1, un deuxième filtre F2 et un troisième filtre F3, ainsi qu'un contrôleur 20.

Chaque filtre 18 est défini par un niveau de criticité NF qui lui est propre.

Ainsi, le premier filtre F1 est propre à laisser uniquement passer des informations de niveau 1 et 2, le deuxième filtre F2 est également propre à laisser uniquement passer les informations de niveau inférieur ou égal à 3 et le troisième filtre F3 est aussi propre à laisser uniquement passer les informations de niveau inférieur ou égal à 4.

Chaque filtre 18 présente la même structure.

A titre d'exemple, la structure du troisième filtre F3 est maintenant décrite.

Le troisième filtre F3 comporte un étage de prétraitement 21, un premier sous-filtre 22, un deuxième sous-filtre 24, une unité d'élimination 26, un premier étage de post-traitement 28 et un deuxième étage de post-traitement 30.

L'étage de prétraitement 21 est propre à prétraiter des informations incidentes.

L'étage de prétraitement 21 est souvent désigné sous le terme de « guichet haut ».

L'étage de prétraitement 21 comporte un pare-feu 32 et un adaptateur 36.

Le pare-feu 32 est propre à vérifier l'en-tête de l'information selon des règles prédéfinies, plus particulièrement les règles prédéfinies pour mettre l'information au format interne de la passerelle 16.

Par exemple, une règle prédéfinie est la taille de l'en-tête ou le respect de la présence d'un codage dans l'en-tête.

Selon un autre exemple, une règle prédéfinie est le nombre d'un type de messages reçus par unité de temps.

Selon encore un autre exemple, une règle prédéfinie effectue une vérification sur le destinataire de l'information.

L'adaptateur 36 est propre à adapter le format d'une information incidente.

Par exemple, l'adaptateur 36 détecte le format de l'information incidente et modifie le format de l'information.

Il est à noter qu'un changement de format permet de réaliser une « rupture protocolaire » qui permet à la fois de s'affranchir des vulnérabilités du protocole des informations incidentes et d'effectuer un nettoyage des informations incidentes.

Chaque sous-filtre 22 et 24 est propre à classer des informations incidentes en deux catégories selon leur niveau de criticité.

Un tel sous-filtre 22 ou 24 est capable d'identifier des informations d'un niveau de criticité auquel il est associé. Une telle identification est, par exemple, mise en oeuvre par analyse de la nature de l'information ou de l'émetteur et du récepteur de l'information.

Plus précisément, un premier niveau de criticité N1 est associé au premier sous-filtre 22. Le premier sous-filtre 22 est propre à classer des informations incidentes en deux catégories, une première catégorie regroupant les informations ayant un niveau de criticité égal au premier niveau de criticité N1 et une deuxième catégorie regroupant les informations ayant un niveau de criticité différent du premier niveau de criticité N1.

Similairement, un deuxième niveau de criticité N2 est associé au deuxième sous-filtre 24. Le deuxième sous-filtre 24 est propre à classer des informations incidentes en deux catégories, une première catégorie regroupant les informations ayant un niveau de criticité égal au deuxième niveau de criticité N2 et une deuxième catégorie regroupant les informations ayant un niveau de criticité différent du deuxième niveau de criticité N2.

Le premier niveau de criticité N1 et le deuxième niveau de criticité N2 dépendent du niveau de criticité NF du troisième filtre F3.

En l'espèce, le premier niveau de criticité N1 et le deuxième niveau de criticité N2 sont égaux entre eux et correspondent au niveau de criticité NF=4 du troisième filtre F3.

Dans l'exemple décrit, les deux catégories de chaque sous-filtre 22 et 24 sont une première catégorie regroupant les informations ayant un niveau de criticité égal au niveau 4 et une deuxième catégorie regroupant des informations ayant un niveau de criticité différent du niveau 4.

Ainsi, chaque sous-filtre 22, 24 comporte deux entrées 22E1, 22E2, 24E1 et 24E2 et deux sorties 22S1, 22S2, 24S1 et 24S2.

Dans le troisième filtre F3, les deux deuxièmes entrées des sous-filtres 22 et 24 ne sont pas utilisées. Leur rôle apparaîtra plus tard dans la description lorsque les autres filtres F1 et F2 seront décrits.

La première entrée 22E1 et 24E1 de chaque sous-filtre 22 et 24 est une entrée dans laquelle des informations incidentes sont injectées dans le sous-filtre 22, 24.

En fonctionnement, les informations classées dans la première catégorie par le sous-filtre 22 ou 24 sortent des chacune des premières sorties 22S1 et 24S1 alors que les informations classées dans la deuxième catégorie sortent par le sous-filtre 22 ou 24 des deuxièmes sorties 22S2 et 24S2.

L'entrée 22E du premier sous-filtre 22 est reliée à la sortie de l'étage de prétraitement 21.

La première sortie 22S1 du premier sous-filtre 22 est reliée à l'entrée du premier étage de post-traitement 28.

La deuxième sortie 22S2 du premier sous-filtre 22 est reliée à la première entrée 24E1 du deuxième sous-filtre 24. Ainsi, le deuxième sous-filtre 24 est relié au premier sous-filtre 22 pour que les informations incidentes du deuxième sous-filtre 24 soient les informations de la deuxième catégorie du premier sous-filtre 22.

La première sortie 24S1 du deuxième sous-filtre 24 est reliée à l'unité d'élimination 26.

La deuxième sortie 24S2 du deuxième sous-filtre 24 est reliée à l'entrée du deuxième étage de post-traitement 30.

L'unité d'élimination 26 est propre à éliminer les informations incidentes.

Le premier étage de post-traitement 28 est propre à post-traiter des informations incidentes.

Le premier étage de post-traitement 28 est souvent désigné sous le terme de « guichet bas ».

Le deuxième étage de post-traitement 30 et le premier étage de post-traitement 28 sont similaires de sorte que les remarques précédentes sont valables et ne sont pas répétées. En particulier, le premier étage de post-traitement 28 comporte les mêmes unités, à savoir un adaptateur 38 et un pare-feu 40 avec un fonctionnement analogue.

Selon l'exemple proposé, les filtres F1, F2 et F3 sont agencés en série par niveau de criticité décroissant.

Pour cela, dans l'exemple proposé, il est utilisé la deuxième entrée 22E2 de chaque premier sous-filtre 22.

Plus précisément, la deuxième sortie 24S2 du deuxième sous-filtre 24 du troisième filtre F3 est reliée à la deuxième entrée 22E2 du premier sous-filtre 22 du deuxième filtre F2.

Similairement, la deuxième sortie 24S2 du deuxième sous-filtre 24 du deuxième filtre F2 est reliée à la deuxième entrée 22E2 du premier sous-filtre 22 du premier filtre F1.

Un tel agencement des filtres 18 correspond à une architecture en cascade.

Par ailleurs, dans le cas décrit, les filtres 18 sont intercalés entre les unités de traitement 14 correspondantes.

Plus précisément, le premier étage de post-traitement 28 de chaque filtre 18 est relié à des unités de traitement 14 ayant le droit de traiter les informations en sortie.

Ainsi, le premier étage de post-traitement 28 du troisième filtre F3 peut être relié aux quatrièmes unités de traitement 14_4, le premier étage de post-traitement 28 du deuxième filtre F2 peut être relié aux quatrièmes unités de traitement 14_4 et aux troisièmes unités de traitement 14_3 et le premier étage de post-traitement 28 du premier filtre F1 peut être relié aux quatrièmes unités de traitement 14_4, aux troisièmes unités de traitement 14_3 et aux deuxièmes unités de traitement 14_2.

Lorsque le niveau de criticité est minimal, la sortie peut être reliée à toutes les unités de traitement 14. Dans l'exemple proposé, une telle sortie est en l'occurrence le deuxième étage de post-traitement 30 du premier filtre F1.

Le contrôleur 20 est propre à contrôler l'ensemble des éléments de la passerelle 16.

Plus précisément, le contrôleur 20 est propre à activer ou désactiver chaque filtre 18.

Le contrôleur 20 est propre à activer ou désactiver indépendamment les uns des autres chaque élément de chaque filtre 18.

Par exemple, le contrôleur 20 est propre à désactiver un étage de prétraitement 21 ou un étage de post-traitement 30 tout en gardant les sous-filtres 22 et 24 actifs.

Cela permet d'adapter une seule fois le format des informations incidentes.

Le contrôleur 20 est propre à contrôler le niveau de criticité de chaque filtre 18, et même le niveau de criticité de chaque sous-filtre 22 et 24.

Le contrôleur 20 est également propre à assurer une ségrégation logique entre l'étage de prétraitement 21, les sous-filtres 22, 24 et les étages de post-traitement 28 et 30, par exemple en jouant le rôle d'un hyperviseur.

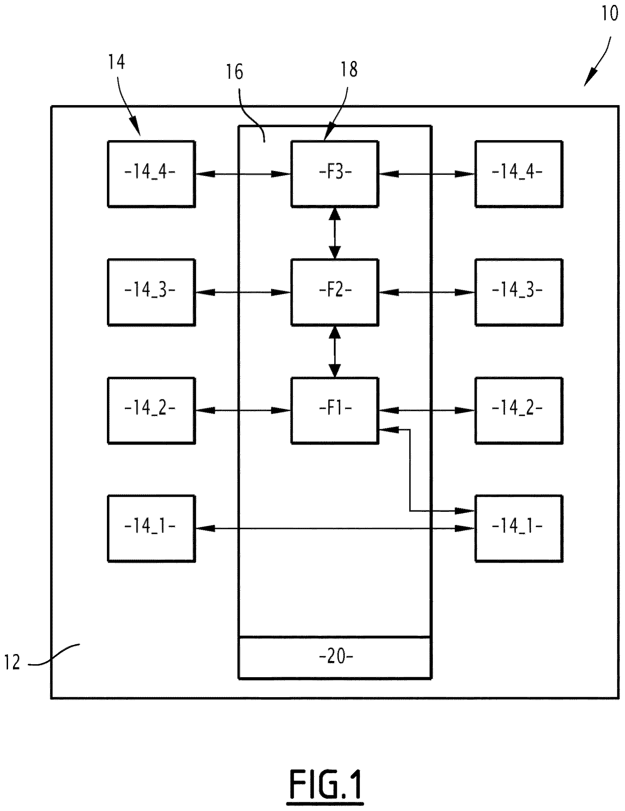

Il est à noter que, par commodité, le contrôleur 20 est présenté comme une unique boîte sur la figure 1 mais, le plus souvent, le contrôleur 20 est réparti localement entre les différents unités (et en particulier, les sous-filtres 22 et 24) qu'il contrôle.

Le contrôleur 20 peut être vu comme un calculateur électronique propre à manipuler et/ou transformer des données représentées comme des quantités électroniques ou physiques dans des registres du système et/ou des mémoires en d'autres données similaires correspondant à des données physiques dans des mémoires, des registres ou d'autres types de dispositifs d'affichage, de transmission ou de mémorisation.

Le contrôleur 20 comporte un processeur comprenant une unité de traitement de données, des mémoires et un lecteur de support d'informations. Le calculateur comprend également un clavier et une unité d'affichage.

En tant qu'exemples spécifiques, le contrôleur 20 comprend un processeur monocoeur ou multicoeurs (tel qu'une unité de traitement centrale (CPU), une unité de traitement graphique (GPU), un microcontrôleur et un processeur de signal numérique (DSP)), un circuit logique programmable (comme un circuit intégré spécifique à une application (ASIC), un réseau de portes programmables *in situ* (FPGA), un dispositif logique programmable (PLD) et des réseaux logiques programmables (PLA)), une machine à états, une porte logique et des composants matériels discrets.

Le produit programme d'ordinateur comporte un support lisible d'informations.

Un support lisible d'informations est un support lisible par le contrôleur 20, usuellement par le lecteur. Le support lisible d'informations est un médium adapté à mémoriser des instructions électroniques et capable d'être couplé à un bus d'un système informatique.

A titre d'exemple, le support lisible d'informations est une disquette ou disque souple (de la dénomination anglaise de « *floppy disk* »), un disque optique, un CD-ROM, un disque magnéto-optique, une mémoire ROM, une mémoire RAM, une mémoire EPROM, une mémoire EEPROM, une carte magnétique ou une carte optique.

Sur le support lisible d'informations est mémorisé un programme d'ordinateur comprenant des instructions de programme.

Le programme d'ordinateur est chargeable sur l'unité de traitement de données et est adapté pour entraîner la mise en oeuvre du procédé de détection.

Le fonctionnement de la passerelle 16 est maintenant illustré en référence à un procédé d'échanges de informations entre deux unités de traitements.

Pour cela, il est illustré le trajet de deux types d'informations dans la passerelle 16.

Une information de niveau 4 entre dans le troisième filtre F3 et est transmis par le premier sous-filtre 22 vers le premier étage de post-traitement 28. L'information de niveau 4 est ainsi identifiée comme une information de niveau 4 et traitée comme telle.

En cas de défaillance du premier sous-filtre 22, l'information de niveau 4 est éliminée par l'unité d'élimination 26 après filtrage par le deuxième sous-filtre 24 du troisième filtre F3. Cela permet que l'information ne soit pas envoyée vers des unités de traitement 14 non autorisées à lire ce type d'informations.

Le seul cas où l'information de niveau 4 serait transmise est que les deux sous-filtres 22 et 24 subissent une panne au même moment.

Une information de niveau 2 passe dans le troisième filtre F3 via le deuxième étage de post-traitement 28 du troisième filtre F3, l'information de niveau 2 n'étant pas égale au niveau 4. L'information de niveau 2 passe également dans le deuxième filtre F2 via le deuxième étage de post-traitement 28 du deuxième filtre F2, l'information de niveau 2 n'étant pas égale au niveau 3. Enfin, l'information de niveau 2 est déterminée comme une information de niveau 2 et sort par le premier étage de post-traitement 28 du premier filtre F1.

Dans les deux exemples, il apparaît que la passerelle 16 garantit un bon cloisonnement des informations.

Autrement formulé, la passerelle 16 garantit le bon routage des informations sans risque de compromission au sens de la confidentialité des informations.

Il est à noter que cette propriété est indépendante du niveau de criticité considéré, l'exemple décrit pouvant être étendu à des niveaux de criticité plus grands ou plus faibles.

De plus, le fonctionnement de la passerelle 16 qui vient d'être décrit l'a été sur une propagation de type descendante mais la passerelle 16 fonctionne de la même manière sur une propagation de type ascendante.

La passerelle 16 est donc bidirectionnelle.

En outre, en cas de défaillance du premier sous-filtre 22, le deuxième sous-filtre 24 prend le relais et assure une redondance. Cela montre que la passerelle 16 est robuste aux pannes.

La passerelle 16 garantit une bonne fiabilité au niveau de la sécurité.

En outre, la passerelle 16 est aisément modulable à l'aide du contrôleur 20.

Par exemple, la passerelle 16 peut être adaptée à une architecture 10 fonctionnant pour des informations ayant un niveau de criticité de niveau 3 au maximum. Pour cela, il suffit que le contrôleur 20 désactive le troisième filtre F3.

Selon un autre exemple, la passerelle 16 peut être adaptée à une architecture 10 fonctionnant pour des informations ayant un niveau de criticité compris entre 10 et 13. Pour cela, il suffit que le contrôleur 20 modifie le niveau de chacun des trois filtres F1, F2 et F3.

La passerelle 16 est ainsi adaptable à tout type d'architecture 12 et par là, à tout type de plate-forme 10.

Cela permet de n'avoir qu'un seul élément à certifier pour un ensemble de plate-forme et de ne pas avoir à développer une passerelle 16 spécifique pour chaque architecture 12.

Il est aussi à noter que la passerelle 16 permet de séparer dans un ensemble de informations en entrées les différents niveaux de celles-ci, ce qui rend l'insertion d'un label lors de l'émission de l'information facultative.

Toutefois, la passerelle du fait de sa modularité est compatible avec des architectures 12 ayant déjà recours à l'insertion de labels dans les informations.

En variante, lorsque la redondance n'est pas nécessaire, le deuxième sous-filtre 24 présente un deuxième niveau de criticité qui est égal au premier niveau de criticité moins 1.

Cela permet d'obtenir une passerelle 16 moins encombrante avec un niveau de sécurité moindre.

## Revendications

1. Passerelle (16) d'échanges d'informations entre des unités de traitement (14), chaque information étant associée à un niveau de criticité propre, chaque unité de traitement (14) étant définie par un niveau de criticité respectif, chaque unité de traitement (14) étant propre à traiter uniquement des informations ayant un niveau de criticité inférieur ou égal au niveau de criticité de l'unité de traitement (14) considérée, la passerelle (16) comportant un filtre (18) auquel est associé un niveau de criticité pour chaque niveau de criticité présent dans les informations échangées entre les unités de traitement (14), l'ensemble des niveaux de criticité étant compris entre 1 et N, N étant un entier supérieur ou égal à 2, chaque filtre (18) comportant :
- un premier sous-filtre d'informations (22) auquel est associé un premier niveau de criticité, le premier sous-filtre (22) étant propre à classer des informations incidentes en deux catégories, une première catégorie regroupant les informations ayant un niveau de criticité égal au premier niveau de criticité et une deuxième catégorie regroupant les informations ayant un niveau de criticité différent du premier niveau de criticité,
- un deuxième sous-filtre d'informations (24) auquel est associé un deuxième niveau de criticité, le deuxième sous-filtre (24) étant propre à classer des informations incidentes en deux catégories, une première catégorie regroupant les informations ayant un niveau de criticité égal au deuxième niveau de criticité et une deuxième catégorie regroupant les informations ayant un niveau de criticité différent du deuxième niveau de criticité,
le deuxième sous-filtre (24) étant relié au premier sous-filtre (22) pour que les informations incidentes du deuxième sous-filtre (24) soient les informations de la deuxième catégorie du premier sous-filtre (22),
le premier niveau de criticité et le deuxième niveau de criticité dépendant du niveau de criticité du filtre (18),
- une unité d'élimination (26) des informations de la première catégorie du deuxième sous-filtre (24), et
- deux étages de post-traitement (28, 30), chaque étage de post-traitement (28, 30) comportant au moins une unité choisie dans la liste constituée d'un adaptateur du format d'une information incidente (38) et d'une pare-feu (40), le premier sous-filtre (22) et le deuxième sous-filtre (24) comportant des premières sorties (22S1, 24S1) par lesquelles sortent les informations de la première catégorie et des deuxièmes sorties (22S2, 24S2) par lesquelles sortent les informations de la deuxième catégorie,
la deuxième sortie (22S2) du premier sous-filtre (22) étant reliée au premier étage de post-traitement (28) et la deuxième sortie (24S2) du deuxième sous-filtre (24) étant reliée au premier étage de post-traitement (28), et
le premier étage de post-traitement (28) de chaque filtre (18) étant relié à des unités de traitement (14) ayant le droit de traiter les informations de sortie du filtre (18).

2. Passerelle selon la revendication 1, dans laquelle le premier niveau de criticité et le deuxième niveau de criticité sont égaux.

3. Passerelle selon la revendication 1, dans laquelle le deuxième niveau de criticité est égal au premier niveau de criticité moins 1.

4. Passerelle selon l'une quelconque des revendications 1 à 3, dans laquelle les filtres (18) sont agencés en série par niveau de criticité décroissant.

5. Passerelle selon l'une quelconque des revendications 1 à 4, dans laquelle chaque filtre (18) présente un étage de prétraitement (21), l'étage de prétraitement (21) comportant au moins une unité choisie dans la liste constituée d'un pare-feu (32) et d'un adaptateur du format d'une information incidente (36).

6. Passerelle selon l'une quelconque des revendications 1 à 5, dans laquelle la passerelle (16) comporte un contrôleur (20), le contrôleur (20) étant propre à activer ou désactiver chaque filtre (18).

7. Passerelle selon la revendication 6, dans laquelle le contrôleur (20) est propre à activer ou désactiver indépendamment les uns des autres chaque élément (21, 22, 24, 26, 28, 30) de chaque filtre (18).

8. Passerelle selon la revendication 6 ou 7, dans laquelle le contrôleur (20) est propre à contrôler le niveau de criticité de chaque filtre (18).

9. Système de traitement d'informations (12), chaque information étant associée à un niveau de criticité propre, le système (12) comprenant :
- des unités de traitement (14), chaque unité de traitement (14) étant définie par un niveau de criticité respectif, chaque unité de traitement (14) étant propre à traiter uniquement des informations ayant un niveau de criticité inférieur ou égal au niveau de criticité de l'unité de traitement (14) considérée,
- une passerelle d'échanges d'informations (16) entre les unités de traitement (14), la passerelle (16) étant selon l'une quelconque des revendications 1 à 8.

10. Plate-forme (10) comportant un système de traitement d'informations (12) selon la revendication 9.

11. Procédé d'échanges d'informations entre une première unité de traitement d'informations (14) et une deuxième unité de traitement d'informations (14), chaque information étant associée à un niveau de criticité propre, chaque unité de traitement (14) étant définie par un niveau de criticité respectif, chaque unité de traitement (14) étant propre à traiter uniquement des informations ayant un niveau de criticité inférieur ou égal au niveau de criticité de l'unité de traitement (14) considérée, le procédé comportant l'envoi d'une information de la première unité de traitement (14) vers une passerelle d'échanges de informations (16), la passerelle (16) comportant un filtre (18) auquel est associé un niveau de criticité pour chaque niveau de criticité présent dans les informations échangées entre les unités de traitement (14), l'ensemble des niveaux de criticité étant compris entre 1 et N, N étant un entier supérieur ou égal à 2, chaque filtre (18) comportant :
- un premier sous-filtre d'informations (22) auquel est associé un premier niveau de criticité, le premier sous-filtre (22) étant propre à classer des informations incidentes en deux catégories, une première catégorie regroupant les informations ayant un niveau de criticité égal au premier niveau de criticité et une deuxième catégorie regroupant les informations ayant un niveau de criticité différent du premier niveau de criticité,
- un deuxième sous-filtre d'informations (24) auquel est associé un deuxième niveau de criticité, le deuxième sous-filtre (24) étant propre à classer des informations incidentes en deux catégories, une première catégorie regroupant les informations ayant un niveau de criticité égal au deuxième niveau de criticité et une deuxième catégorie regroupant les informations ayant un niveau de criticité différent du deuxième niveau de criticité,
le deuxième sous-filtre (24) étant relié au premier sous-filtre (22) pour que les informations incidentes du deuxième sous-filtre (24) soient les informations de la deuxième catégorie du premier sous-filtre (22),
le premier niveau de criticité et le deuxième niveau de criticité dépendant du niveau de criticité du filtre (18),
- une unité d'élimination (26) des informations de la première catégorie du deuxième sous-filtre (22), et
- deux étages de post-traitement (28, 30), chaque étage de post-traitement (28, 30) comportant au moins une unité choisie dans la liste constituée d'un adaptateur du format d'une information incidente (38) et d'une pare-feu (40), le premier sous-filtre (22) et le deuxième sous-filtre (24) comportant des premières sorties (22S1, 24S1) par lesquelles sortent les informations de la première catégorie et des deuxièmes sorties (22S2, 24S2) par lesquelles sortent les informations de la deuxième catégorie,
la deuxième sortie (22S2) du premier sous-filtre (22) étant reliée au premier étage de post-traitement (28) et la deuxième sortie (24S2) du deuxième sous-filtre (24) étant reliée au premier étage de post-traitement (28), et
le premier étage de post-traitement (28) de chaque filtre (18) étant relié à des unités de traitement (14) ayant le droit de traiter les informations de sortie du filtre (18).

12. Produit programme d'ordinateur comportant un support lisible d'informations, sur lequel est mémorisé un programme d'ordinateur comprenant des instructions de programme, le programme d'ordinateur étant chargeable sur une unité de traitement de données et mettant en oeuvre au moins une étape d'un procédé selon la revendication 11 lorsque le programme d'ordinateur est mis en oeuvre sur l'unité de traitement des données.

13. Support lisible d'informations comportant des instructions de programme formant un programme d'ordinateur, le programme d'ordinateur étant chargeable sur une unité de traitement de données et mettant en oeuvre au moins une étape d'un procédé selon la revendication 11 lorsque le programme d'ordinateur est mis en oeuvre sur l'unité de traitement de données.

## Patentansprüche

1. Gateway (16) zum Austausch von Informationen zwischen Verarbeitungseinheiten (14), wobei jede Information mit einem eigenen Kritikalitätsniveau assoziiert ist, jede Verarbeitungseinheit (14) durch ein jeweiliges Kritikalitätsniveau definiert ist, jede Verarbeitungseinheit (14) geeignet ist, um nur Informationen zu verarbeiten, die ein Kritikalitätsniveau aufweisen, das kleiner als oder gleich wie das Kritikalitätsniveau der betrachteten Verarbeitungseinheit (14) ist, das Gateway (16) umfassend einen Filter (18), mit dem ein Kritikalitätsniveau für jedes Kritikalitätsniveau assoziiert ist, das in den zwischen den Verarbeitungseinheiten (14) ausgetauschten Informationen vorhanden ist, wobei die Gesamtheit der Kritikalitätsniveaus zwischen 1 und N liegt, wobei N eine ganze Zahl größer als oder gleich wie 2 ist, jeder Filter (18) umfassend:
- einen ersten Informations-Subfilter (22), mit dem ein erstes Kritikalitätsniveau assoziiert ist, wobei der erste Subfilter (22) geeignet ist, um ankommende Informationen in zwei Kategorien zu klassifizieren, wobei eine erste Kategorie die Informationen zusammenfasst, die ein Kritikalitätsniveau gleich wie das erste Kritikalitätsniveau aufweisen, und eine zweite Kategorie die Informationen zusammenfasst, die ein Kritikalitätsniveau aufweisen, das von dem ersten Kritikalitätsniveau verschieden ist,
- einen zweiten Informations-Subfilter (24), mit dem ein zweites Kritikalitätsniveau assoziiert ist, wobei der zweite Subfilter (24) geeignet ist, um ankommende Informationen in zwei Kategorien zu klassifizieren, wobei eine erste Kategorie die Informationen zusammenfasst, die ein Kritikalitätsniveau gleich wie das zweite Kritikalitätsniveau aufweisen, und eine zweite Kategorie die Informationen zusammenfasst, die ein Kritikalitätsniveau aufweisen, das von dem zweiten Kritikalitätsniveau verschieden ist,
wobei der zweite Subfilter (24) mit dem ersten Subfilter (22) verbunden ist, damit die ankommenden Informationen des zweiten Subfilters (24) die Informationen der zweiten Kategorie des ersten Subfilters (22) sind,
wobei das erste Kritikalitätsniveau und die zweite Kritikalitätsniveau von der Kritikalitätsniveau des Filters (18) abhängen,
- eine Eliminierungseinheit (26) der Informationen der ersten Kategorie aus dem zweiten Subfilter (24), und
- zwei Nachverarbeitungsstufen (28, 30), jede Nachverarbeitungsstufe (28, 30) umfassend mindestens eine Einheit, die ausgewählt ist aus der Liste, bestehend aus einem Adapter des Formats von ankommenden Informationen (38) und einer Firewall (40), der erste Subfilter (22) und der zweite Subfilter (24) umfassend erste Ausgänge (22S1, 24S1), durch die die Informationen der ersten Kategorie ausgegeben werden, und zweite Ausgänge (22S2, 24S2), durch die die Informationen der zweiten Kategorie ausgegeben werden,
wobei der zweite Ausgang (22S2) des ersten Subfilters (22) mit der ersten Nachbehandlungsstufe (28) verbunden ist und der zweite Ausgang (24S2) des zweiten Subfilters (24) mit der ersten Nachbehandlungsstufe (28) verbunden ist, und
die erste Nachverarbeitungsstufe (28) von jedem Filter (18) mit Verarbeitungseinheiten (14) verbunden ist, die das Recht haben, die Ausgangsinformationen des Filters (18) zu verarbeiten.

2. Gateway nach Anspruch 1, wobei das erste Kritikalitätsniveau und das zweite Kritikalitätsniveau gleich sind.

3. Gateway nach Anspruch 1, wobei das zweite Kritikalitätsniveau gleich wie das erste Kritikalitätsniveau minus 1 ist.

4. Gateway nach einem der Ansprüche 1 bis 3, wobei die Filter (18) gemäß absteigendem Kritikalitätsniveau in Reihe angeordnet sind.

5. Gateway nach einem der Ansprüche 1 bis 4, wobei jeder Filter (18) eine Vorverarbeitungsstufe (21) aufweist, die Vorverarbeitungsstufe (21) umfassend mindestens eine Einheit, die ausgewählt ist aus der Liste, bestehend aus einer Firewall (32) und einem Adapter des Formats für ankommende Informationen (36).

6. Gateway nach einem der Ansprüche 1 bis 5, wobei das Gateway (16) eine Steuerung (20) umfasst, wobei die Steuerung (20) geeignet ist, um jeden Filter (18) zu aktivieren oder zu deaktivieren.

7. Gateway nach Anspruch 6, wobei die Steuerung (20) geeignet ist, um jedes Element (21, 22, 24, 26, 28, 30) von jedem Filter (18) unabhängig voneinander zu aktivieren oder zu deaktivieren.

8. Gateway nach Anspruch 6 oder 7, wobei die Steuerung (20) geeignet ist, um das Kritikalitätsniveau von jedem Filter (18) zu steuern.

9. Informationsverarbeitungssystem (12), wobei jede Information mit einem eigenen Kritikalitätsniveau assoziiert ist, das System (12) umfassend:
- Verarbeitungseinheiten (14), wobei jede Verarbeitungseinheit (14) durch ein jeweiliges Kritikalitätsniveau definiert ist, wobei jede Verarbeitungseinheit (14) geeignet ist, um nur Informationen zu verarbeiten, die ein Kritikalitätsniveau aufweisen, das kleiner als oder gleich wie das Kritikalitätsniveau der betrachteten Verarbeitungseinheit (14) ist,
- ein Informationsaustausch-Gateway (16) zwischen den Verarbeitungseinheiten (14), wobei das Gateway (16) nach einem der Ansprüche 1 bis 8 ist.

10. Plattform (10), umfassend ein Informationsverarbeitungssystem (12) nach Anspruch 9.

11. Informationsaustauschverfahren zwischen einer ersten Informationsverarbeitungseinheit (14) und einer zweiten Informationsverarbeitungseinheit (14), wobei jede Information mit einem eigenen Kritikalitätsniveau assoziiert ist, wobei jede Verarbeitungseinheit (14) durch ein jeweiliges Kritikalitätsniveau definiert ist, wobei jede Verarbeitungseinheit (14) geeignet ist, um nur Informationen zu verarbeiten, die ein Kritikalitätsniveau aufweisen, das kleiner als oder gleich wie das Kritikalitätsniveau der betrachteten Verarbeitungseinheit (14) ist, das Verfahren umfassend das Senden einer Information von der ersten Verarbeitungseinheit (14) zu einem Informationsaustausch-Gateway (16), das Gateway (16) umfassend einen Filter (18), mit dem ein Kritikalitätsniveau für jedes Kritikalitätsniveau assoziiert ist, das in den zwischen den Verarbeitungseinheiten (14) ausgetauschten Informationen vorhanden ist, wobei die Gesamtheit der Kritikalitätsniveaus zwischen 1 und N liegt, wobei N eine ganze Zahl größer als oder gleich wie 2 ist, jeder Filter (18) umfassend:
- einen ersten Informations-Subfilter (22), mit dem ein erstes Kritikalitätsniveau assoziiert ist, wobei der erste Subfilter (22) geeignet ist, um ankommende Informationen in zwei Kategorien zu klassifizieren, wobei eine erste Kategorie die Informationen zusammenfasst, die ein Kritikalitätsniveau gleich wie das erste Kritikalitätsniveau aufweisen, und eine zweite Kategorie die Informationen zusammenfasst, die ein Kritikalitätsniveau aufweisen, das von dem ersten Kritikalitätsniveau verschieden ist,
- einen zweiten Informations-Subfilter (24), mit dem ein zweites Kritikalitätsniveau assoziiert ist, wobei der zweite Subfilter (24) geeignet ist, um ankommende Informationen in zwei Kategorien zu klassifizieren, wobei eine erste Kategorie die Informationen zusammenfasst, die ein Kritikalitätsniveau gleich wie das zweite Kritikalitätsniveau aufweisen, und eine zweite Kategorie die Informationen zusammenfasst, die ein Kritikalitätsniveau aufweisen, das von dem zweiten Kritikalitätsniveau verschieden ist,
wobei der zweite Subfilter (24) mit dem ersten Subfilter (22) verbunden ist, damit die ankommenden Informationen des zweiten Subfilters (24) die Informationen der zweiten Kategorie des ersten Subfilters (22) sind,
wobei das erste Kritikalitätsniveau und die zweite Kritikalitätsniveau von der Kritikalitätsniveau des Filters (18) abhängen,
- eine Eliminierungseinheit (26) der Informationen der ersten Kategorie aus dem zweiten Subfilter (22), und
- zwei Nachverarbeitungsstufen (28, 30), jede Nachverarbeitungsstufe (28, 30) umfassend mindestens eine Einheit, die ausgewählt ist aus der Liste, bestehend aus einem Adapter des Formats von ankommenden Informationen (38) und einer Firewall (40), der erste Subfilter (22) und der zweite Subfilter (24) umfassend erste Ausgänge (22S1, 24S1), durch die die Informationen der ersten Kategorie ausgegeben werden, und zweite Ausgänge (22S2, 24S2), durch die die Informationen der zweiten Kategorie ausgegeben werden,
wobei der zweite Ausgang (22S2) des ersten Subfilters (22) mit der ersten Nachbehandlungsstufe (28) verbunden ist und der zweite Ausgang (24S2) des zweiten Subfilters (24) mit der ersten Nachbehandlungsstufe (28) verbunden ist, und
die erste Nachverarbeitungsstufe (28) von jedem Filter (18) mit Verarbeitungseinheiten (14) verbunden ist, die das Recht haben, die Ausgangsinformationen des Filters (18) zu verarbeiten.

12. Computerprogrammprodukt, umfassend einen lesbaren Informationsträger, auf dem ein Computerprogramm umfassend Programmanweisungen gespeichert ist, wobei das Computerprogramm auf eine Datenverarbeitungseinheit geladen werden kann und mindestens einen Schritt eines Verfahrens nach Anspruch 11 implementiert, wenn das Computerprogramm auf der Datenverarbeitungseinheit implementiert wird.

13. Lesbarer Informationsträger, umfassend Programmanweisungen, die ein Computerprogramm bilden, wobei das Computerprogramm auf eine Datenverarbeitungseinheit geladen werden kann und mindestens einen Schritt eines Verfahrens nach Anspruch 11 implementiert, wenn das Computerprogramm auf der Datenverarbeitungseinheit implementiert wird.

## Claims

1. A gateway (16) for exchanging information between processing units (14), each piece of information being associated with its own level of criticality, each processing unit (14) being defined by a respective level of criticality, each processing unit (14) being suitable for processing only information having a level of criticality lower than or equal to the level of criticality of the processing unit (14) considered, the gateway (16) comprising a filter (18) with which a level of criticality is associated for each level of criticality present in the information exchanged between the processing units (14), the set of levels of criticality being between 1 and N, N being an integer greater than or equal to 2, each filter (18) comprising:
- a first information sub-filter (22) with which a first level of criticality is associated, the first sub-filter (22) being suitable for classifying incident information into two categories, a first category grouping information having a level of criticality equal to the first level of criticality and a second category grouping the information having a level of criticality different from the first level of criticality,
- a second information sub-filter (24) with which is associated a second level of criticality, the second sub-filter (24) being able to classify incident information into two categories, a first category grouping information having a level of criticality equal to the second level of criticality and a second category grouping information having a level of criticality different from the second level of criticality,
the second sub-filter (24) being connected to the first sub-filter (22) so that the incident information of the second sub-filter (24) is the information of the second category of the first sub-filter (22),
the first level of criticality and the second level of criticality depending on the level of criticality of the filter (18),
- a unit (26) for eliminating information from the first category of the second sub-filter (24), and
- two post-processing stages (28, 30), each post-processing stage (28, 30) comprising at least one unit chosen from the list consisting of an incident information format adapter (38) and a firewall (40),
the first sub-filter (22) and the second sub-filter (24) comprising first outputs (22S1, 24S1) whereby the information of the first category comes out and second outputs (22S2, 24S2) whereby the information of the second category comes out,
the second output (22S2) of the first sub-filter (22) being connected to the first post-processing stage (28) and the second output (24S2) of the second sub-filter (24) being connected to the first post-processing stage (28), and
the first post-processing stage (28) of each filter (18) being connected to processing units (14) authorized to process the information output from the filter (18).

2. The gateway according to claim 1, wherein the first level of criticality and the second level of criticality are equal.

3. The gateway according to claim 1, wherein the second level of criticality is equal to the first level of criticality minus 1.

4. The gateway according to any one of claims 1 to 3, wherein the filters (18) are arranged in series by decreasing level of criticality.

5. The gateway according to any one of claims 1 to 4, wherein each filter (18) has a preprocessing stage (21), the preprocessing stage (21) comprising at least one unit chosen from the list consisting of a firewall (32) and an incident information format adapter (36).

6. The gateway according to any one of claims 1 to 5, wherein the gateway (16) comprises a controller (20), the controller (20) being capable of activating or deactivating each filter (18).

7. The gateway according to claim 6, wherein the controller (20) is capable of activating or deactivating each element (21, 22, 24, 26, 28, 30) of each filter (18) independently of one another.

8. The gateway according to claim 6 or 7, wherein the controller (20) is capable of controlling the level of criticality of each filter (18).

9. An information processing system (12), each piece of information being associated with its own level of criticality, the architecture (12) comprising:
- processing units (14), each processing unit (14) being defined by a respective level of criticality, each processing unit (14) being able to process only information having a level of criticality less than or equal to the level of criticality of the processing unit (14) considered,
- an information exchange gateway (16) between the processing units (14), the gateway (16) being according to any one of claims 1 to 8.

10. A platform (10) comprising an information processing system (12) according to claim 9.

11. A method of exchanging information between a first information processing unit (14) and a second information processing unit (14), each piece of information being associated with its own level of criticality, each processing unit (14) being defined by a respective level of criticality, each processing unit (14) being able to process only information having a level of criticality lower than or equal to the level of criticality of the processing unit (14) considered, the method comprising sending information from the first processing unit (14) to an information exchange gateway (16), the gateway (16) comprising a filter (18) with which a level of criticality is associated for each level of criticality present in the information exchanged between the processing units (14), the set of levels of criticality being between 1 and N, N being an integer greater than or equal to 2, each filter (18) comprising:
- a first information sub-filter (22) with which a first level of criticality is associated, the first sub-filter (22) being suitable for classifying incident information into two categories, a first category grouping information having a level of criticality equal to the first level of criticality and a second category grouping information having a level of criticality different from the first level of criticality,
- a second information sub-filter (24) with which a second level of criticality is associated, the second sub-filter (24) being able to classify incident information into two categories, a first category grouping information having a level of criticality equal to the second level of criticality and a second category grouping information having a level of criticality different from the second level of criticality,
the second sub-filter (24) being connected to the first sub-filter (22) so that the incident information of the second sub-filter (24) is the information of the second category of the first sub-filter (22),
the first level of criticality and the second level of criticality depending on the level of criticality of the filter (18),
- a unit (26) for eliminating information from the first category of the second sub-filter (22), and
- two post-processing stages (28, 30), each post-processing stage (28, 30) comprising at least one unit chosen from the list consisting of an incident information format adapter (38) and a firewall (40),
the first sub-filter (22) and the second sub-filter (24) comprising first outputs (22S1, 24S1) whereby the information of the first category comes out and second outputs (22S2, 24S2) whereby the information of the second category comes out,
the second output (22S2) of the first sub-filter (22) being connected to the first post-processing stage (28) and the second output (24S2) of the second sub-filter (24) being connected to the first post-processing stage (28), and
the first post-processing stage (28) of each filter (18) being connected to processing units (14) authorized to process the information output from the filter (18).

12. A computer program product comprising a readable information medium, on which a computer program is stored comprising program instructions, the computer program being loadable on a data processing unit and implementing at least one step of a method according to claim 11 when the computer program is implemented on the data processing unit.

13. A readable information medium comprising program instructions forming a computer program, the computer program being loadable on a data processing unit and implementing at least one step of a method according to claim 11 when the program computer is implemented on the data processing unit.
